# EUROPEAN PATENT APPLICATION

(11) **EP 1 722 121 A1**
(43) Date of publication of application: **15.11.2006**
(21) Application number: 05010078.3
(22) Date of filing: 09.05.2005
(51) Int. Cl.: F16D 48/02, F16D 25/12, F16H 61/00

(54) **Hydraulic double clutch**

(71) Applicant: Hoerbiger Antriebstechnik GmbH, 86956 Schongau (DE)
(72) Inventor: De Maziere, Filip, B-9070 Heusden-Destelbergen (BE)
(74) Representative: Hager, Thomas Johannes

(57) **Abstract**

Double clutch (1) of a double clutch transmission of an engine comprising two clutch packs associated to two coaxial shafts, two clutch pistons each of which activating one of the clutch packs, a hydraulic control device including a low pressure pump (3) for lubrication and cooling of the clutch plates of the clutch packs, a high pressure pump (4) for activation of the clutch piston and the synchronizer, the low pressure pump (3) and the high pressure pump (4) being disposed in parallel, and an electronic control device (5) controlling the hydraulic control system (2), wherein a flow switch (6) is provided in a low engine speed range, is adapted to combine the oil flow of the low pressure pump (3) and the high pressure pump (4) at high pressure.

## Description

The present invention concerns the power supply for a hydraulic double clutch according to the preamble part of claim 1.

Such a double clutch is known from EP 1 195 537 B1.

As the pump flow of the pumps of the hydraulic control device of such a double clutch is dependent on the engine speed, known double clutches suffer from the drawback that it is at least difficult to provide a sufficient oil pressure and supply especially for quick shifts and in case the engine is running in a low engine speed range.

It is therefore an object of the present invention to provide a double clutch according to the preamble part of claim 1 that is particularly able to perform quick shifts even at low engine speed, without consuming too much power over the whole speed range.

The solution of this object is achieved by the features of claim 1.

According to the present invention, a double clutch of a clutch transmission for an engine (internal combustion engine) includes a hydraulic control device having a low pressure pump as well as a high pressure pump.

Moreover, the double clutch according to the present invention comprises a flow switch that is able to connect the high pressure pump and the low pressure pump in low engine speed ranges so that the oil flow of the low pressure pump as well as the high pressure pump can be combined to create an enforced oil flow (at raised oil pressure) that is fed to the clutch pistons of the clutch packs of the double clutch so that the clutch pistons can selectively be activated, especially in order to perform quick shifts, with a sufficient oil pressure level even in a low engine speed range. This raised oil flow at high pressure is also used to move the pistons of the shift forks. It is also important that these forks can be moved fast. Therefore a high pressure and a high flow are needed simultaneously.

The flow switch can take the form of appropriate hydraulic shift valve, especially an on-off valve having 2 positions:
- Adding the flow of the low pressure pump to the flow of the high pressure pump
- Separating the flows: the flow from the low pressure pump is used for the lubrication of the clutches and the flow of the high pressure pump is used for the high pressure control valve

In any case is the excess of flow from the high pressure control valve used for cooling purposes. This excess of flow is sent back to the low pressure line.

The dependent claims contain advantageous embodiments of the present invention.

A preferred disposition of the flow switch is the low pressure line downstream of the low pressure pump creating a flow connection of the low pressure pump, either to the cooling lines, either to the high pressure lines. When the switch connects the flow of the low pressure pump to the high pressure system, the low pressure lines are blocked to prevent the low pressure oil from leaking away.

Of course, if there is sufficient oil pressure, the flow switch need not to be operated, so that the low pressure pump can normally serve the purpose of lubrication while the high pressure pump serves the purpose of activating the clutch pistons of the double clutch and the pistons for synchronizer activation in all engine speed ranges that ensure a sufficiently high oil pressure level.

At even higher engine speeds, or when not much cooling flow towards the clutches is needed, another valve will switch the flow of the low pressure pump to the tank or to the suction. Doing so, this low pressure pump will consume almost no mechanical power anymore. This valve is an optional device meant for further reduction of power consumption.

In a preferred embodiment, a pressure regulator for adjusting the pressure level depending on how much torque has to be transmitted can be provided.

In another preferred embodiment, two variable flow regulators can be provided that adjust the oil amount to the two clutches of the double clutch according to the present invention taking into account the respective operating conditions of the clutch and the engine, respectively. These valves are electronically controlled.

Moreover, a flow limiter is limiting the total oil flow to both clutches in case no hydraulic fluid or only a low amount of hydraulic fluid (oil) is needed. The flow limiter is in fact a differential pressure regulator, which keeps the pressure drop over the flow regulators constant. This feature is meant to limit the pressure in the cooling lines so that the low pressure pump woks at a lower pressure and is thus consuming less power.

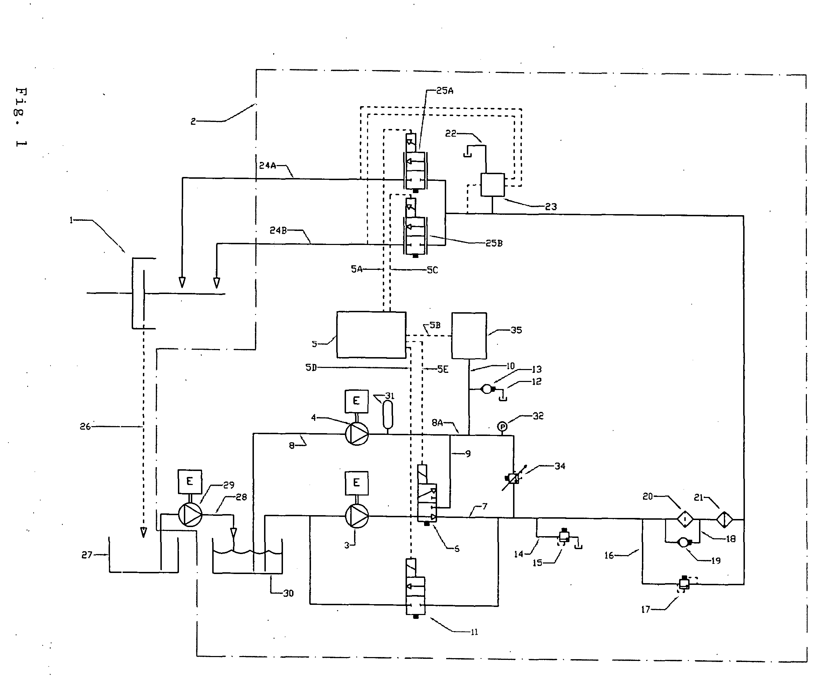

Further features and advantages of the present application will become apparent from the following description of a preferred embodiment with reference to the appended single figure of the drawing.

This single figure shows a schematically simplified block diagram of a hydraulic double clutch according to the present invention.

The figure shows a schematically simplified double clutch 1 that, of course, comprises all components known hydraulic double clutches are provided with. In particular, the double clutch 1 comprises two clutch packs associated with coaxial shafts (not shown) and clutch pistons for activating the clutch discs of said clutch packs. For the purpose of disclosure of these known components, reference is herewith made to EP 1 195 537 B1, the entire contents of which is herewith incorporated into the disclosure of this application by reference.

Double clutch 1 also comprises a hydraulic control device 2 that is an arrangement of all hydraulic components surrounded by the dash-dotted line in the figure and being designated by reference sign 2.

Hydraulic control device 2 includes a low pressure pump 3 for lubrication and cooling of the clutch plates of the clutch packs of double clutch 1.

Moreover, hydraulic control system 2 comprises a high pressure pump 4 for activation of the clutch piston of the clutch packs and the synchronizers which are not shown in the figure.

As can be seen from the figure, pumps 3 and 4 are disposed in parallel in a low pressure line 7 and a high pressure line 8, respectively. Double clutch 1 and the hydraulic control device 2, respectively, are controlled by an electronic control unit that is supplied with all necessary signals from double clutch 1, the hydraulic component of the hydraulic control system 2 as well as the engine and that is connected via control lines to all components of the entire system to be controlled, with dotted lines 5a - 5d being examples of respective control lines.

The hydraulic control device 2 furthermore comprises a flow switch 6 preferably being disposed in low pressure line 7 downstream of low pressure pump 3. Said flow switch 6 is adapted to connect low pressure pump 3 and high pressure pump 4 in case the engine is running in a low engine speed range in order to be able to create a sufficiently high oil flow at high pressure to double clutch 1 especially in cases of the need of quick shifts. Said flow switch 6 is disposed in a connection line 9, a suitable flow connection for a high pressure oil flow being provided by connection line 9, line section 8A of high pressure line 8 and connection line 10 via a hydraulic control valve 35, as is clearly shown in the figure in order to provide a flow connection to the clutch pistons (not shown) operating the clutch packs (not shown) of hydraulic double clutch 1.

Branching from connection line 10, there is a high pressure drain line 12 being provided with a high pressure safety valve 13. Moreover, a low pressure line 14 is provided branching off low pressure line 7 and being provided with a low pressure safety valve 15.

A pressure regulator line 16 branches off low pressure line 7 downstream of low pressure line 14 and comprises a differential pressure regulator. This regulator is added to limit the pressure at the pump at high speed. Also this feature reduces the power consumption.

From line 7 a short circuit switch 11 is optionally added which can be selected to send all the flow of the low pressure pump 3 back to its suction. This short circuiting of the flow will bring the power consumption of this pump almost to zero.

This switch will be used at high engine speeds when the high pressure pump 4 is delivering sufficient flow to the cooling line 7.

Parallel to the filter 20, there is a bypass line 18 comprising a bypass valve 19.

Said bypass line bypasses a filter 20 in low pressure line 7 downstream of which there is a cooler 21.

Downstream of cooler 21, there is a flow limiter 23 that can be disposed in line or in parallel (as shown) to low pressure line 7. Said flow limiter 23 is adapted for limiting the total amount of oil flow to both clutch packs of double clutch 1 in case of no need or a low need of oil and is therefore connected to a flow limiter drain line 22.

Moreover, two flow regulators 25 are disposed in low pressure line 7 and comprise the flow lines 24 to double clutch 1. Said flow regulators 25 can adjust the oil amount to the two clutch packs of double clutch 1 according to the respective operating conditions.

The oil exiting the clutch is collected in the sump. This is represented by the dotted line 26. Optionally this sump 27 can be made as a dry sump 27 that, in turn, is connected via a wet sump line 28 to a wet sump 30. A scavenging pump 29 (optionally) is disposed in wet sump line 28 and provides a flow connection between dry sump 27 and wet sump 30.

Moreover, as an optional feature, a damper 31 can be provided downstream of high pressure pump 4 in high pressure line 8.

For the sake of completeness, it is to be noted that, of course, a suitable amount of sensors, as pressure sensor 32 can also be part of said hydraulic control device 2. Finally, variable pressure regulator 34 is disposed in a line section 8B of high pressure line 8 downstream of high pressure pump 4. Said variable pressure regulator 34 is adapted for adjusting the pressure level depending on how much torque has to be transmitted by double clutch 1.

In addition to the written description, explicit reference is herewith made to the single figure of the drawing for the purpose of disclosure of all elements and features of the double clutch 1 according to the present invention and its hydraulic control device 2, respectively.

### List of reference signs

- 1: double clutch
- 2: hydraulic control device
- 3: low pressure pump
- 4: high pressure pump
- 5: electronic control means/unit
- 5A - 5E: control lines
- 6: flow switch
- 7: low pressure line
- 8: high pressure line
- 8A, 8B: high pressure line sections
- 9, 10: connection lines
- 11: short circuit switch
- 12: high pressure drain line
- 13: high pressure safety valve
- 14: low pressure drain line
- 15: low pressure safety valve
- 16: pressure regulator line
- 17: differential pressure regulator
- 18: bypass line
- 19: bypass valve
- 20: filter
- 21: cooler
- 22: flow limiter drain line
- 23: flow limiter
- 24A, B: flow lines
- 25A, B: flow regulators
- 26: dry sump line
- 27: dry sump
- 28: wet sump line
- 29: scavenging pump (optional)
- 30: wet sump
- 31: damper (optional)
- 32: pressure sensors
- 34: variable pressure valve/regulator
- 35: hydraulic control valve

## Claims

1. Double clutch (1) of a double clutch transmission of an engine comprising:
- two clutch packs associated to two shafts;
- two clutch pistons each of which activating one of the clutch packs;
- a hydraulic control device including:
• a low pressure pump (3) for lubrication and cooling of the clutch plates of the clutch packs;
• a high pressure pump (4) for activation of the clutch piston and the synchronizer;
• the low pressure pump (3) and the high pressure pump (4) being disposed in parallel; and
- an electronic control device (5) controlling the hydraulic control system (2), being **characterized**
- **by** a flow switch (6) that, in a low engine speed range, is adapted to combine the oil flow of the low pressure pump (3) and the high pressure pump (4) at high pressure.

2. Double clutch according to claim 1 being **characterized in that** said flow switch (6) is disposed in a low pressure line (7) downstream of low pressure pump (3).

3. Double clutch according to claim 1 or 2 **characterized by** a pressure regulator (34) adjusting the oil pressure level upstream of the regulator (34) depending on the amount of torque to be transmitted and/or depending on the desired shift time.

4. Double clutch according to one of claims 1 to 3 being **characterized by** two flow regulators (25) being adapted to adjust the oil amount to the clutch packs according to the respective operating conditions.

5. Double clutch according to one of claims 1 to 4 being **characterized by** a flow limiter (23) for limiting the total amount of oil flow to the clutch packs in case of no need or low need of oil.

6. Double clutch according to claims 4 and 5 being **characterized in that** said flow limiter (23) cooperates with said flow regulators (25).

7. Hydraulic control device (2) for a double clutch (1) according to the preamble part of claim 1 being **characterized by** at least one feature of claims 1 to 5.

## Amended claims

### Amended claims in accordance with Rule 86(2) EPC.

**1.** Double clutch (1) of a double clutch transmission of an engine comprising:
- two clutch packs associated to two shafts;
- two clutch pistons each of which activating one of the clutch packs;
- a hydraulic control device including:
• a low pressure pump (3) for lubrication and cooling of the clutch plates of the clutch packs;
• a high pressure pump (4) for activation of the clutch piston and the synchronizer;
• the low pressure pump (3) and the high pressure pump (4) being disposed in parallel;
- an electronic control device (5) controlling the hydraulic control system (2), and
- by a flow switch (6) that, in a low engine speed range, is adapted to combine the oil flow of the low pressure pump (3) and the high pressure pump (4) at high pressure, being **characterized**
- **by** a switch valve (11) being disposed in a short circuit of the low pressure line (7) of the low pressure pump (3).
